# EUROPEAN PATENT APPLICATION

(11) **EP 4 811 877 A1**
(43) Date of publication of application: **23.09.2026**
(21) Application number: 24902398.7
(22) Date of filing: 29.10.2024
(51) Int. Cl.: H04W 52/02

(54) **COMMUNICATION METHOD AND APPARATUS**

(30) Priority: 15.12.2023 CN 202311735677
(71) Applicant: Huawei Technologies Co., Ltd., Shenzhen, Guangdong 518129 (CN)
(72) Inventor: FU, Jinshu, Shenzhen, Guangdong 518129 (CN); WEI, Dongdong, Shenzhen, Guangdong 518129 (CN); TANG, Hao, Shenzhen, Guangdong 518129 (CN)
(74) Representative: Pfenning, Meinig & Partner mbB
(86) International application number: PCT/CN2024/128280
(87) International publication number: WO 2025/123974

(57) **Abstract**

This application and provides a communication method and apparatus to reduce power consumption of a terminal device, and relates to the field of wireless communication technologies. In the method, a first communication apparatus includes a first module and a second module, where power consumption of the first module is lower than power consumption of the second module. The first communication apparatus receives a low-power wake-up signal that indicates a function to be performed by the first module. The first communication apparatus activates the first module to perform the function. Based on the foregoing solution, because the low-power wake-up signal indicates the function of the first module, the terminal device can wake up the first module to perform the corresponding function. Compared with a related technology in which all functions are performed by the second module, this can reduce a quantity of times of waking up the second module, thereby avoiding frequent wake-ups of the second module and achieving energy saving.

## Description

### CROSS-REFERENCE TO RELATED APPLICATIONS

This application claims priority to Chinese Patent Application No. 202311735677.5, filed with the China National Intellectual Property Administration on December 15, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

In Release 18, the 3rd Generation Partnership Project (3rd Generation Partnership Project, 3GPP) conducted research on a low-power (low-power, LP) wake-up signal (wake-up signal, WUS), with an objective to evaluate the potential for reducing power consumption of a terminal equipped with a low-power radio (low-power radio, LR). Generally, even when the terminal does not send or receive any data, the terminal still consumes power of tens of milliwatts, which is referred to as idle power consumption. The idle power consumption is caused by the fact that the terminal needs to periodically measure and detect a potential LP-WUS. The LR periodically measures and detects an LP-WUS, and a main radio (main radio, MR) may be turned off when the LR is in an active state and searches for potential LP-WUS signals. When detecting an LP-WUS, the LR may wake up the MR to send and receive data.

However, each turn-on or turn-off of the MR causes additional energy consumption, and a power ramp-up occurs when a power amplifier (power amplifier, PA) of the MR is turned on, resulting in a specific latency and additional power consumption as power changes from zero to a stable state. Therefore, frequent wake-up of the MR makes it difficult to achieve energy saving.

### SUMMARY

This application provides a communication method and apparatus, to reduce power consumption of a terminal device.

According to a first aspect, a communication method is provided. The method may be performed by a first communication apparatus or a chip/chip system. The first communication apparatus may be a network device or a terminal device. In the method, the first communication apparatus includes a first module and a second module. Power consumption of the first module is lower than power consumption of the second module. The first communication apparatus receives a low-power wake-up signal. The low-power wake-up signal indicates a function to be performed by the first module. The first communication apparatus activates the first module to perform the function.

Based on the foregoing solution, the low-power wake-up signal indicates the function of the first module. Therefore, the terminal can wake up the first module to perform a corresponding function. Compared with a related technology in which all functions are performed by the second module, this can reduce a quantity of times of waking up the second module. Therefore, frequent wake-up of the second module can be avoided, which achieves energy saving.

According to a second aspect, a communication method is provided. The method may be performed by a second communication apparatus or a chip/chip system. The second communication apparatus may be a network device or a terminal device. In the method, the second communication apparatus determines a low-power wake-up signal. The low-power wake-up signal indicates a function to be performed by a first module included in a communication apparatus. Power consumption of the first module is lower than power consumption of a second module included in the communication apparatus. The second communication apparatus sends the low-power wake-up signal to the communication apparatus.

In a possible implementation of the first aspect and the second aspect, the function includes one or more of the following: channel state information measurement, radio resource management measurement, small data transmission, sensing, or radio frequency channel data RF-map updating.

Based on the foregoing solution, the first module has a simple structure, a long data processing latency, and low power consumption. Therefore, the first module is suitable for a small data transmission scenario with a low data amount and latency insensitiveness. In addition, functions of channel state information measurement and radio resource management measurement may be used to detect measurement signals on a part of bandwidth or detect measurement signals received by some antenna ports, and therefore may be performed by the first module, to achieve energy saving. Sensing or radio frequency channel data updating may be implemented by measuring a linear signal, for example, a chirp signal, and therefore may be performed by the first module, to reduce energy consumption of the communication apparatus.

In a possible implementation of the first aspect and the second aspect, the function includes sensing, and the low-power wake-up signal further indicates one or more of the following: a waveform of a sensing signal, a waveform for reporting a sensing result, a time domain resource of a sensing signal, a quantity of sensing times, or a moment for reporting a sensing result.

Based on the foregoing solution, when the low-power wake-up signal indicates that the function of the first module includes sensing, the low-power wake-up signal may further indicate sensing configuration information, so that the terminal can wake up the first module and perform sensing based on the sensing configuration information.

In a possible implementation of the first aspect and the second aspect, the waveform of a sensing signal includes a chirp signal or an orthogonal frequency division multiplexing (orthogonal frequency division multiplexing, OFDM) signal.

Based on this solution, because the chirp signal is a linear modulation signal, processing at a transmit end and a receive end is simple, power consumption is low, and resolution is high for sensing an environment, a target location, a speed, a texture, and the like. OFDM has high power and strong coverage. Therefore, a sensing result with high accuracy can be obtained.

In a possible implementation of the first aspect and the second aspect, the function includes radio resource management measurement, and the low-power wake-up signal further indicates one or more of the following: a signal format for measurement or a measurement rule.

Based on this solution, when the low-power wake-up signal indicates that the function of the first module includes radio resource management measurement, the low-power wake-up signal may further indicate configuration information of radio resource management measurement, and the terminal can wake up the first module to perform radio resource management measurement based on the configuration information.

In a possible implementation of the first aspect and the second aspect, the signal format for measurement includes a low-power synchronization signal or a synchronization signal and physical broadcast channel block (synchronization signal and physical broadcast channel block, SSB). Based on this solution, because the SSB is relatively complex, a relatively accurate detection result can be obtained, while the low-power synchronization signal may be in a simplified format compared with the SSB and may be sent and measured with lower power.

In a possible implementation of the first aspect and the second aspect, the measurement rule includes relaxed measurement or normal measurement. Based on this solution, the LP-WUS may indicate a measurement rule of the SSB or the low-power synchronization signal.

In a possible implementation of the first aspect and the second aspect, the measurement rule includes relaxed measurement, and the low-power wake-up signal further indicates a quantity of measurement times, a measurement period, a length of a measurement window, or a starting position of a measurement window. Based on this solution, the low-power wake-up signal may indicate measurement configuration information of the SSB or the low-power synchronization signal, and the terminal can wake up the first module to perform measurement based on the measurement configuration, and receive and measure the SSB or the low-power synchronization signal.

In a possible implementation of the first aspect and the second aspect, radio resource management measurement includes neighboring cell measurement, and the low-power wake-up signal further indicates a quantity of neighboring cells associated with a cell in which the terminal device is located.

Based on this solution, for neighboring cell measurement, the low-power wake-up signal indicates a quantity of neighboring cells associated with the cell in which the terminal is located; or in other words, the low-power wake-up signal indicates a size of a list (list) of neighboring cells, for radio resource management measurement, that are associated with the cell in which the terminal is located. A larger quantity indicates a larger list for radio resource management measurement and a larger number of cells that can be selected for handover. A smaller quantity indicates a smaller list for radio resource management measurement, less radio resource management measurement times, and better effect of energy saving.

In a possible implementation of the first aspect and the second aspect, the low-power wake-up signal indicates that the function includes sensing and radio resource management measurement, and the low-power wake-up signal further indicates that a waveform for measurement is a chirp signal.

Based on this solution, the sensing function and the radio resource management measurement function both involve receiving a signal and performing measurement on the signal by the first module. Therefore, the low-power wake-up signal may indicate the first module to simultaneously perform the sensing function and the radio resource management measurement function. This can reduce overheads of a sensing signal and a signal for radio resource management measurement, and avoid energy consumption caused by a plurality of signal receptions and a plurality of measurement times at the terminal. Moreover, the chirp signal has low power, and therefore consumes little energy, which can further reduce energy consumption of the terminal.

According to a third aspect, a communication apparatus is provided, including a processing unit and a transceiver unit. The transceiver unit is configured to receive a low-power wake-up signal. The low-power wake-up signal indicates a function to be performed by the first module. The processing unit is configured to activate the first module to perform the function.

According to a fourth aspect, a communication apparatus is provided, including a processing unit and a transceiver unit. The processing unit is configured to determine a low-power wake-up signal. The low-power wake-up signal indicates a function to be performed by a first module included in a communication apparatus. Power consumption of the first module is lower than power consumption of a second module included in the communication apparatus. The transceiver unit is configured to send the low-power wake-up signal to a first communication apparatus.

In a possible implementation of the third aspect and the fourth aspect, the function includes one or more of the following: channel state information measurement, radio resource management measurement, small data transmission, sensing, or radio frequency channel data RF-map updating.

In a possible implementation of the third aspect and the fourth aspect, the function includes sensing, and the low-power wake-up signal further indicates one or more of the following: a waveform of a sensing signal, a waveform for reporting a sensing result, a time domain resource of a sensing signal, a quantity of sensing times, or a moment for reporting a sensing result.

In a possible implementation of the third aspect and the fourth aspect, the waveform of a sensing signal includes a chirp signal or an orthogonal frequency division multiplexing (orthogonal frequency division multiplexing, OFDM) signal.

In a possible implementation of the third aspect and the fourth aspect, the function includes radio resource management measurement, and the low-power wake-up signal further indicates one or more of the following: a signal format for measurement or a measurement rule.

In a possible implementation of the third aspect and the fourth aspect, the signal format for measurement includes a low-power synchronization signal or a synchronization signal and physical broadcast channel block.

In a possible implementation of the third aspect and the fourth aspect, the measurement rule includes relaxed measurement or normal measurement.

In a possible implementation of the third aspect and the fourth aspect, the measurement rule includes relaxed measurement, and the low-power wake-up signal further indicates a quantity of measurement times, a measurement period, a length of a measurement window, or a starting position of a measurement window.

In a possible implementation of the third aspect and the fourth aspect, radio resource management measurement includes neighboring cell measurement, and the low-power wake-up signal further indicates a quantity of neighboring cells associated with a cell in which the terminal device is located.

In a possible implementation of the third aspect and the fourth aspect, the low-power wake-up signal indicates that the function includes sensing and radio resource management measurement, and the low-power wake-up signal further indicates that a waveform for measurement is a chirp signal.

According to a fifth aspect, this application provides a communication apparatus, including a processor. The processor is coupled to a memory. The memory is configured to store a computer program or instructions. The processor is configured to execute the computer program or the instructions, to perform the implementation methods in the first aspect and the second aspect. The memory may be located inside or outside the apparatus. There are one or more processors.

According to a sixth aspect, this application provides a communication apparatus, including a processor and an interface circuit. The interface circuit is configured to communicate with another apparatus, and the processor is configured to perform the implementation methods in the first aspect and the second aspect.

According to a seventh aspect, a communication apparatus is provided. The apparatus includes a logic circuit and an input/output interface.

According to an eighth aspect, this application provides a communication system, including a first communication apparatus and a second communication apparatus that are configured to perform the implementation methods in the first aspect and the second aspect.

According to a ninth aspect, this application further provides a chip system, including a processor configured to perform the implementation methods in the first aspect and the second aspect.

According to a tenth aspect, this application further provides a computer program product, including computer-executable instructions. When the computer-executable instructions are run on a computer, the implementation methods in the first aspect and the second aspect are performed.

According to an eleventh aspect, this application further provides a computer-readable storage medium. The computer-readable storage medium stores a computer program or instructions. When the instructions are run on a computer, the implementation methods in the first aspect and the second aspect are implemented.

For technical effects achieved in the third aspect to the eleventh aspect, refer to technical effects in the first aspect and the second aspect. Details are not described herein again.

### BRIEF DESCRIPTION OF DRAWINGS

FIG. 1 is a diagram of a communication system according to an embodiment of this application;
FIG. 2 is a block diagram of a terminal according to an embodiment of this application;
FIG. 3 is an example flowchart of a communication method according to an embodiment of this application;
FIG. 4A is a diagram of a time domain resource of a sensing signal according to an embodiment of this application;
FIG. 4B is a diagram of a time domain resource of a sensing result according to an embodiment of this application;
FIG. 5A is a diagram of a rule for relaxed measurement according to an embodiment of this application;
FIG. 5B is a diagram of RRM measurement according to an embodiment of this application;
FIG. 6 is a diagram of a communication apparatus according to an embodiment of this application;
FIG. 7 is a diagram of another communication apparatus according to an embodiment of this application;
FIG. 8 is a diagram of still another communication apparatus according to an embodiment of this application; and
FIG. 9 is a diagram of yet another communication apparatus according to an embodiment of this application.

### DESCRIPTION OF EMBODIMENTS

For ease of understanding the technical solutions provided in embodiments of this application, the following explains and describes technical terms in embodiments of this application.
(1) A low-power wake-up signal (low-power wake-up signal, LP-WUS) is used in a plurality of low-power communication protocols, such as long range radio (long range radio, LoRa), Bluetooth (Bluetooth), or a wireless network transmission technology (wireless fidelity, Wi-Fi). The LP-WUS allows for design and implementation of low-power receivers, which helps reduce device power consumption. The LP-WUS is very similar to a WUS. The WUS is delivered based on a conventional Zadoff-Chu (Zadoff-Chu, ZC) sequence and downlink control information (downlink control information, DCI) in a format (format) 2-6 in a physical downlink control channel (physical downlink control channel, PDCCH). If a WUS is detected, decoding of a paging message continues; otherwise, the device returns to a sleep state and waits for a next occasion to receive a WUS.

The technical solutions in embodiments of this application may be applied to a new radio (New Radio, NR) system, a long term evolution (long term evolution, LTE) system, an LTE frequency division duplex (Frequency Division Duplex, FDD) system, an LTE time division duplex (time division duplex, TDD) system, a worldwide interoperability for microwave access (Worldwide Interoperability for Microwave Access, WiMAX) communication system, a 5th generation (5th generation, 5G) communication system, a next generation wireless communication system such as 6G, and the like. This is not limited herein.

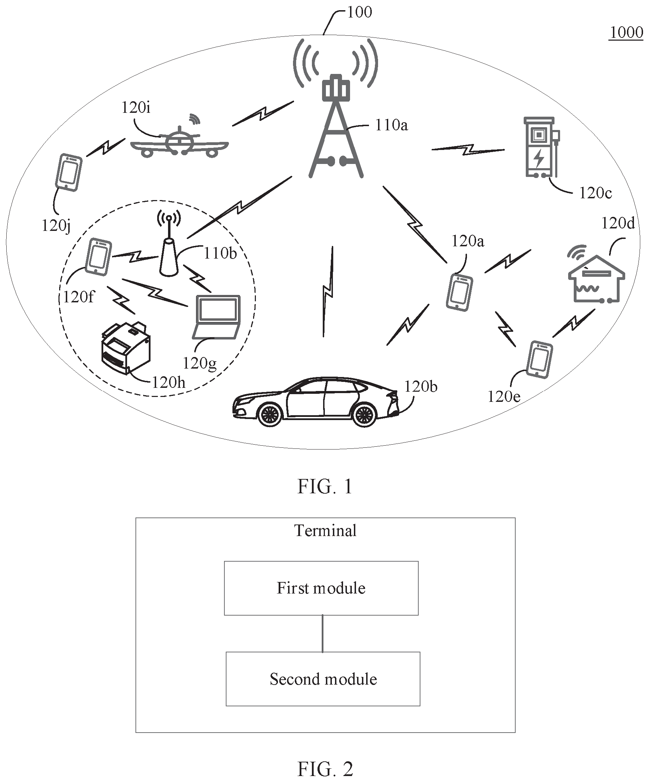

FIG. 1 is a diagram of an architecture of a communication system 1000 to which embodiments of this application are applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. Terminal apparatuses may be connected to each other in a wired or wireless manner, and network devices may be connected to each other in a wired or wireless manner. FIG. 1 is only a diagram. The communication system may further include other network devices, for example, a wireless relay device and a wireless backhaul device, which are not shown in FIG. 1.

The network device is a network-side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some of functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes collaborate to assist the terminal in implementing radio access, and different RAN nodes respectively implement some functions of the base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, intelligent transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific apparatus form that are used by the terminal apparatus are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and an artificial satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device. In other words, 110a and 120i communicate with each other by using a wireless air interface protocol. Certainly, 110a and 120i may alternatively communicate with each other based on an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device. In the following description, an example in which the terminal performs the function of the terminal device and the base station performs the function of the network device.

With development of 5G technology, a 5G network has an increasingly high requirement on a capability of a terminal. As the requirement on the capability of the terminal increases, hardware of the terminal increases accordingly, and power consumption of the terminal inevitably rises. Compared with an LTE terminal, a 5G terminal supports a maximum power of 29 dBm. For typical services, such as web browsing, instant messaging, gaming, and food, power consumption of the 5G terminal increases by more than 200% on average compared with that of the LTE terminal. Long battery life of the terminal is an important aspect of user experience, and affects applicability of the 5G terminal or services. Therefore, long battery life of the 5G terminal is facing a great challenge, and researching how to reduce power consumption of the 5G terminal is key to addressing this challenge.

With reference to FIG. 2, the terminal may include low-power wake-up radio (low-power wake-up radio, LR) and main radio (main radio, MR). It may be understood that the LR and the MR may be integrated into a same processor (for example, a chip) as logical function modules, or the LR and the MR may be used as independent processors (for example, chips). Power consumption of the LR is lower than power consumption of the MR. In another example, a bandwidth of the LR is also lower than a bandwidth of the MR. It should be noted that the MR and the LR are merely used as example names. The LR may also be referred to as an auxiliary module, and the MR may also be referred to as a main module. This is not specifically limited in this application. In embodiments of this application, an example in which the LR is a first module and the MR is a second module is used for description.

In R18, the 3rd Generation Partnership Project (3rd Generation Partnership Project, 3GPP) conducted research on a low-power (low-power, LP) wake-up signal (wake-up signal, WUS), with an objective to evaluate the potential for reducing power consumption of a 5G terminal equipped with a LR. Generally, even when the 5G terminal does not send or receive any data, the 5G terminal still consumes power of tens of milliwatts, which is referred to as idle power consumption. The idle power consumption is caused by the fact that the 5G terminal needs to periodically measure and detect a potential LP-WUS. The LR periodically measures and detects an LP-WUS, and the MR may be turned off when the LR is in an active state and searches for a potential LP-WUS signal. When detecting an LP-WUS, the LR may wake up the MR to send and receive data.

However, each turn-on or turn-off of the MR causes additional energy consumption, and a power ramp-up occurs when a power amplifier (power amplifier, PA) of the MR is turned on, resulting in a specific latency and additional power consumption as power changes from zero to a stable state. For example, during radio resource management (radio resource management, RRM) measurement, the LR may receive an LP-WUS, and wake up the MR to perform RRM measurement. After the measurement is completed, the MR may sleep. For another example, after receiving an LP-WUS, the LR may wake up the MR to receive and demodulate a signal. In these processes, additional power consumption is caused by waking up the MR. Therefore, frequent wake-up of the main module makes it difficult to achieve effect of energy saving.

In view of this, embodiments of this application provide a communication method. In the method, the LP-WUS indicates a function to be performed by LR, so that the terminal can wake up the LR to perform the corresponding function. Compared with a related technology in which all functions are performed by the MR, this reduces a quantity of times of waking up the MR. Therefore, frequent wake-up of the MR can be avoided, which achieves energy saving.

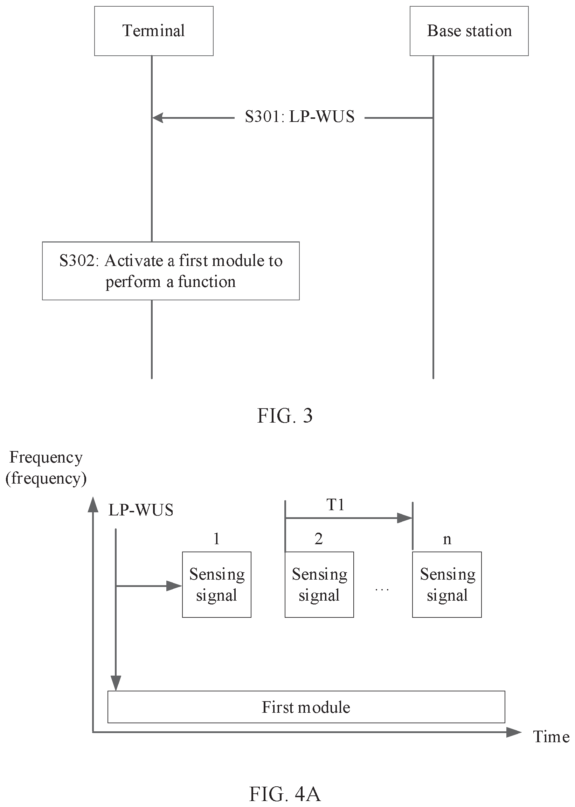

FIG. 3 is an example flowchart of a communication method according to an embodiment of this application. The method may include the following operations. In the embodiment shown in FIG. 3, a first communication apparatus may include a first module and a second module. Power consumption of the first module is lower than power consumption of the second module. In the embodiment shown in FIG. 3, an example in which the first communication apparatus is a terminal and a second communication apparatus is a base station is used for description.

S301: The base station sends a low-power wake-up signal to the terminal.

Correspondingly, the terminal receives the low-power wake-up signal from the base station.

The low-power wake-up signal indicates a function of the first module. For example, the low-power wake-up signal may carry first indication information (indicator), where the first indication information indicates the function of the first module. In this embodiment of this application, the low-power wake-up signal may be received by a low-power receiver, which helps reduce power consumption of a device. The following uses an example in which the low-power wake-up signal is described as the LP-WUS.

S302: The terminal activates the first module to perform the function.

The terminal may receive the LP-WUS. For example, the terminal may receive the LP-WUS through the first module, and obtain information carried in the LP-WUS after demodulation. For example, after demodulation, the terminal obtains the first indication information carried in the LP-WUS, and activates, based on the first indication information, the first module to perform the function indicated by the first indication information.

It may be understood that, activating (activating) the first module may be understood as enabling the first module or waking up (waking up) the first module, which essentially means that the function indicated by the LP-WUS is performed by using the first module.

The following describes, with reference to Table 1, functions of the first module indicated by the first indication information carried in the LP-WUS.

**Table 1: Example of the functions of the first module indicated by the first indication information**

| First indication information (indicator) | Function |
|---|---|
| 0 | Channel state information measurement |
| 1 | Radio resource management measurement |
| 2 | Small data transmission |
| 3 | Sensing (sensing) |
| 4 | Radio frequency channel data RF-map updating |

In Table 1, when a value of the first indication information is 0, it may indicate to activate (or enable) the channel state information measurement function of the first module. Activating the channel state information measurement function of the first module may be understood as activating a function, of the first module, of receiving a channel state information (channel state information, CSI) reference signal (reference signal, RS), and activating a function, of the first module, of performing sending through a physical uplink control channel (physical uplink control channel, PUCCH). In this way, the first module may send, to the base station through the PUCCH, a channel quality indicator (continuous quality improvement, CQI) based on a CSI-RS measurement result. Although the first module has a simple structure, the first module can complete CSI-RS measurement and the PUCCH sending function, which can reduce power consumption of the terminal compared with a case in which the second module performs the channel state information measurement function.

When the value of the first indication information is 1, it may indicate to activate (or enable) the RRM measurement function of the first module. Activating the radio resource management (radio resource management, RRM) measurement function of the first module may be understood as activating a function, of the first module, of receiving a signal from a neighboring cell, and activating the PUCCH sending function of the first module. Although the first module has a simple structure, the first module can complete signal measurement for a neighboring cell and the PUCCH sending function, which can reduce power consumption of the terminal compared with a case in which the second module performs the RRM measurement function.

When the value of the first indication information is 2, it may indicate to activate (or enable) the small data transmission function of the first module. The first module has a simple structure, a long data processing latency, and low power consumption. Therefore, the first module is suitable for a small data transmission (small data transmission, SDT) scenario with a low data amount and latency insensitiveness. Therefore, the first indication information may be set to 2, to indicate the terminal to activate the first module to send or receive data.

In Table 1, activating the sensing function of the first module may be understood as activating (or enabling) a function, of the first module, of receiving a sensing signal and sending a sensing result. Activating the RF-map updating function of the first module may be understood as activating (or enabling) a function, of the first module, of receiving a sensing signal and processing the sensing signal to obtain the RF-map. In this embodiment of this application, the RF-map may indicate information in the following two aspects:
In one aspect, the RF-map corresponds to a specific geographical region, and indicates geographical locations and region sizes of a plurality of regions obtained by dividing the geographical region. In the other aspect, the RF-map may indicate a predicted channel quality value of each of the plurality of regions. The geographical region may be a region in a specific range in a real physical world. The plurality of regions may be regions obtained by dividing the geographical region in a specific manner. In this application, different regions have a same shape, contour, size, radius, and area. Different regions have different geographical locations. Different regions do not overlap with each other.

In a possible case, the LP-WUS may indicate one function in Table 1. The terminal may activate the first module to perform the function indicated by the LP-WUS. In another possible case, the LP-WUS may indicate a plurality of functions in Table 1. The terminal may activate the first module to perform the plurality of functions one by one, as indicated by the LP-WUS.

It may be understood that a correspondence between the first indication information and the function of the first module shown in Table 1 is merely an example, and does not constitute a limitation on the correspondence. In addition, the values of the first indication information in Table 1 are also shown as examples. In this embodiment of this application, the first indication information may further indicate the function of the first module by indicating a function identifier or the like. Indication information in the following, such as second indication information and third indication information, is also shown as an example. This will not be repeated.

The following uses an example in which the LP-WUS indicates the first module to perform the sensing function and the RRM measurement function for description. The LP-WUS may further indicate sensing configuration information or RRM measurement configuration information.

In a possible implementation, the LP-WUS indicates the first module to perform the sensing function. As one of important concepts in 5G and 6G, sensing is usually deployed with a cellular network, and includes two modes: monostatic and bistatic. The base station may indicate, through the LP-WUS, the first module to perform sensing.

When the LP-WUS indicates the first module to perform the sensing function, the LP-WUS may indicate one or more of a waveform of a sensing signal, a waveform for reporting a sensing result, a time domain resource of a sensing signal, a quantity of sensing times, or a moment for reporting a sensing result. Details are described below.

In an example, the LP-WUS may indicate the time domain resource of a sensing signal. With reference to FIG. 4A, the LP-WUS carries a time domain resource indicator K3, where K3 represents a time interval from receiving the LP-WUS to performing sensing. The LP-WUS may further indicate a sensing interval T1, where the sensing interval T1 represents an interval between two sensing signals. The LP-WUS may further indicate the quantity of sensing times n, where the quantity of sensing times n is an integer greater than or equal to 1. The base station indicates the quantity of sensing times n through the LP-WUS, so that the terminal can determine a quantity of sensing signals. The LP-WUS indicates K3 and the sensing interval T1, so that the terminal can determine a time domain resource of each sensing signal. In this way, the first module can be activated, and the sensing signal can be accurately received.

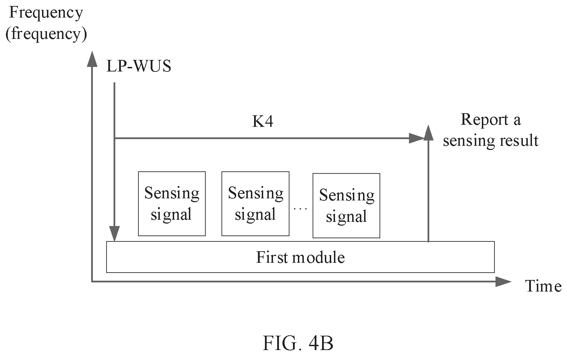

After receiving n sensing signals, the first module may complete feedback of the sensing result through an uplink channel such as the PUCCH. In another example, the LP-WUS may indicate a time domain resource of the sensing result, and the terminal may send the PUCCH through the first module on the time domain resource of the sensing result, where the PUCCH carries the sensing result. With reference to FIG. 4B, the LP-WUS may indicate a time domain resource K4 of the sensing result, where K4 indicates a time interval from receiving the LP-WUS to sending the sensing result.

It may be understood that a table for K4 may be a newly defined time domain resource, and reference may be made to a table for K2 in uplink scheduling in a related technology. Alternatively, the table for K2 in uplink scheduling in a related technology may be reused for the table for K4, and a difference lies in that the table for K4 is smaller than the table for K2.

In still another example, the LP-WUS may indicate the waveform of a sensing signal. For example, the LP-WUS may carry second indication information, where the second indication information may indicate the waveform of a sensing signal. The following provides descriptions with reference to Table 2.

**Table 2: Example of waveforms of a sensing signal indicated by the second indication information**

| Second indication information | Waveform of a sensing signal |
|---|---|
| 0 | Chirp signal |
| 1 | OFDM |

In Table 2, when a value of the second indication information is 0, it may indicate that the waveform of a sensing signal is chirp, and information is carried by using a frequency and a slope of a chirp signal. Because the chirp signal is a linear modulation signal, processing at a transmit end and a receive end is simple, power consumption is low, and resolution is high for sensing an environment, a target location, a speed, a texture, and the like.

When the value of the second indication information is 1, it may indicate that the waveform of a sensing signal is OFDM. An OFDM signal has strong coverage. Therefore, a sensing result with high accuracy can be obtained, and a conventional transceiver can be reused.

It should be noted that a manner in which the second indication information indicates the waveform of a sensing signal shown in Table 2 is merely an example. Alternatively, when the value of the second indication information is 1, it may indicate that the waveform of a sensing signal is chirp; or when the value of the second indication information is 0, it may indicate that the waveform of a sensing signal is OFDM. The second indication information may be newly added indication information, or may reuse an existing field in the LP-WUS. This is not specifically limited in this application.

In another example, the LP-WUS may indicate the waveform for reporting a sensing result. For example, the LP-WUS may carry third indication information, where the third indication information may indicate the waveform for reporting a sensing result. The following provides descriptions with reference to Table 3.

**Table 3: Example of waveforms of a sensing signal indicated by the third indication information**

| Third indication information | Waveform for reporting a sensing result |
|---|---|
| 0 | Chirp signal |
| 1 | OFDM |

In Table 3, when the value of the third indication information is 0, it may indicate that the waveform for reporting a sensing result is chirp. When the value of the third indication information is 1, it may indicate that the waveform for reporting a sensing result is OFDM. The chirp signal has low transmit power and low energy consumption. Therefore, carrying a sensing result by using the chirp can reduce power consumption of the terminal. OFDM has high power and strong coverage. Therefore, a possibility of receiving a sensing result can be improved.

It should be noted that a manner in which the third indication information indicates the waveform of for reporting a sensing result shown in Table 3 is merely an example. Alternatively, when the value of the third indication information is 1, it may indicate that the waveform for reporting a sensing result is chirp; or when the value of the third indication information is 0, it may indicate that the waveform for reporting a sensing result is OFDM. The third indication information may be newly added indication information, or may reuse an existing field in the LP-WUS. This is not specifically limited in this application.

It may be understood that the second indication information and the third indication information may be designed as one piece of indication information, for example, fourth indication information, to jointly indicate the waveform of a sensing result and the waveform for reporting a sensing result. The following provides descriptions with reference to Table 4.

**Table 4: Example of fourth indication information**

| Fourth indication information | Waveform of a sensing signal | Waveform for reporting a sensing result |
|---|---|---|
| 0 | Chirp | OFDM |
| 1 | Chirp | Chirp |
| 2 | OFDM | Chirp |
| 3 | OFDM | OFDM |

As shown in Table 4, the waveform of a sensing signal and the waveform for reporting a sensing result may be jointly indicated by using the fourth indication information. It is assumed that the fourth indication information is 2 bits. When a value of the fourth indication information is 0, it may indicate that the waveform of a sensing signal is chirp, and the waveform for reporting a sensing result is OFDM. When the value of the fourth indication information is 1, it may indicate that the waveform of a sensing signal is chirp, the waveform for reporting a sensing result is chirp, and the like.

It should be noted that a manner in which the fourth indication information indicates the waveform of a sensing result and the waveform for reporting a sensing result shown in Table 4 is merely an example. The fourth indication information may be newly added indication information, or may reuse an existing field in the LP-WUS. This is not specifically limited in this application.

Based on the foregoing solution, the base station indicates, through the LP-WUS, the sensing configuration information, and indicates the first module to perform the sensing function. After receiving the LP-WUS, the terminal may obtain the sensing configuration information, and activate the first module to perform the sensing function based on the configuration information.

In another possible implementation, the LP-WUS indicates the first module to perform the RRM measurement function. For example, the LP-WUS may indicate the first module to perform functions such as cell measurement and/or neighboring cell measurement.

When the LP-WUS indicates the first module to perform the RRM measurement function, the LP-WUS may indicate a signal type for measurement. For example, the LP-WUS may indicate to use an LP-synchronization signal (synchronization signal, SS) to complete measurement, or indicate to use an SSB to complete measurement. For example, the LP-WUS may include fifth indication information. The fifth indication information may indicate to use the LP-SS to complete measurement or indicate to use the SSB to complete measurement. It is assumed that the fifth indication information is 1-bit indication information. When a value of the fifth indication information is 0, it may indicate to use the LP-SS to complete measurement. When the value of the fifth indication information is 1, it may indicate to use the SSB to complete measurement. Alternatively, when the value of the fifth indication information is 1, it may indicate to use LP-SS to complete measurement; or when the value of the fifth indication information is 0, it may indicate to use the SSB to complete measurement.

Different from a related technology in which a reference signal such as the SSB is configured by using radio resource control (radio resource control, RRC) to complete RRM measurement, in the foregoing solution of this application, the LP-WUS may be used to indicate to use the LP-SS to complete RRM measurement. This can simplify a format of the SSB, and perform sending and measurement with lower power.

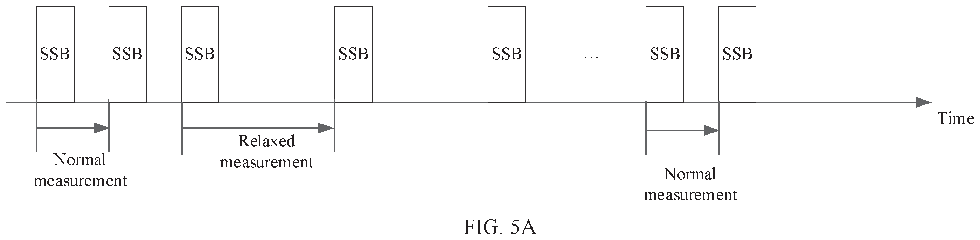

In an example, the LP-WUS may indicate a measurement rule of RRM measurement. For example, the LP-WUS may carry sixth indication information, where the sixth indication information may indicate to use a normal measurement rule or a relaxed (relaxed) measurement rule as the measurement rule of RRM measurement. With reference to FIG. 5A, the relaxed measurement rule allows the SSB or the LP-SS to complete measurement within a larger timing configuration window. This achieves energy saving by reducing a quantity of measurement.

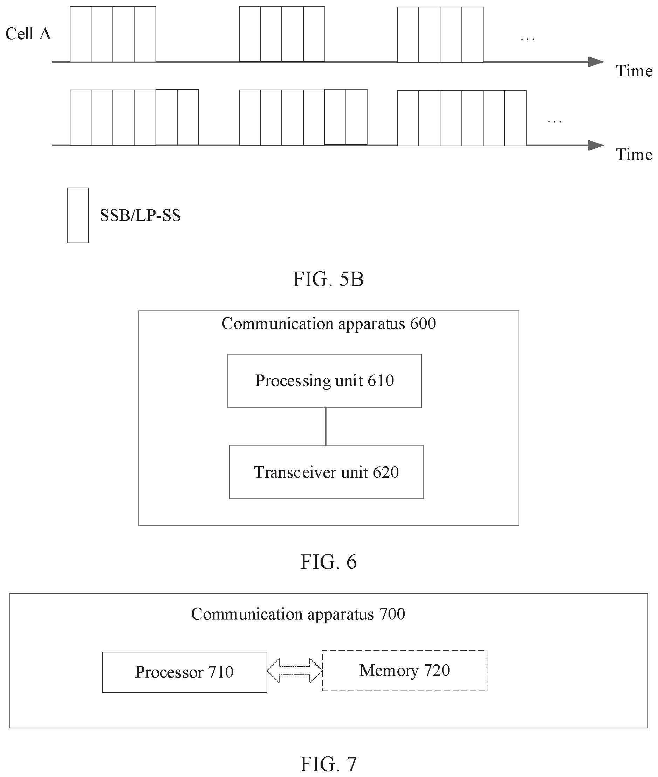

In this embodiment of this application, the LP-WUS may indicate a position of a timing configuration window for RRM measurement, for example, indicating a length and a starting position of the timing configuration window. With reference to FIG. 5B, the terminal may activate the first module to complete SSB or the LP-SS measurement based on the starting position and the length of the timing configuration window that are indicated by the LP-WUS. If the SSB is used to complete the measurement, the first module detects a power and a beam of the SSB within the timing configuration window (SMTC), and continues to perform detection in a next same timing configuration window. If the LP-SS is used to complete the measurement, the first module detects a power and a beam of the LP-SS in the timing configuration window, and continues to perform detection in a next same timing configuration window.

In another example, the LP-WUS may indicate a quantity of measurement times and a measurement period. The terminal may determine, based on a quantity of times indicated by the quantity of measurement times and the period indicated by the quantity of measurement times, a quantity of times that the timing configuration window appears and an interval between the timing configuration windows, and perform measurement on the LP-SS or the SSB.

In a related technology, there is no termination condition for SSB measurement. In this embodiment of this application, the LP-WUS may indicate a termination condition for RRM measurement, for example, a threshold of a measurement result. The terminal may stop measurement when the measurement result reaches the threshold. For another example, the LP-WUS may indicate a termination moment of RRM measurement. For example, the LP-WUS may indicate a termination time point of RRM measurement, or the LP-WUS may indicate timing duration of a timer (timer). When the timing duration expires, it may indicate that the termination moment of RRM measurement is reached, and the terminal may stop measurement.

In this embodiment of this application, for neighboring cell measurement, the LP-WUS indicates a quantity of neighboring cells associated with a cell in which the terminal is located, or the LP-WUS indicates a size of a list (list) of neighboring cells, for RRM measurement, that are associated with the cell in which the terminal is located. A larger quantity indicates a larger list for RRM measurement and a larger number of cells that can be selected for handover. A smaller quantity indicates a smaller list for RRM measurement, fewer RRM measurement times, and better effect of energy saving.

In a possible implementation, the LP-WUS may indicate the first module to simultaneously perform the sensing function and the RRM measurement function, and the LP-WUS may indicate that the sensing signal (the measurement signal) is chirp. In the method, the sensing function and the RRM measurement function both involve receiving a signal and performing measurement on the signal by the first module. Therefore, the LP-WUS may indicate the first module to simultaneously perform the sensing function and the RRM measurement function. This can reduce overheads of a sensing signal and a signal for RRM measurement, and avoid energy consumption caused by a plurality of signal receptions and a plurality of measurement times at the terminal. Moreover, the chirp signal has low power, and therefore consumes little energy, which can further reduce energy consumption of the terminal.

After completing the sensing function and the RRM measurement function, the first module may report a result through an uplink channel such as the PUCCH. The LP-WUS indicates that a reporting rule is periodic or event-triggered.

In a possible case, the LP-WUS indicates that a sensing result or an RRM measurement result is reported periodically. The LP-WUS may indicate a first period or a second period, and the first period may be less than the second period. It may be understood that configurations of the first period and the second period may be determined based on a latency requirement of the first module and the base station for the terminal. Switching between the first period and the second period is indicated by the LP-WUS. In other words, the LP-WUS may indicate that the reporting period of the sensing result or the RRM measurement result is the first period or the second period. Based on this solution, different periods can be configured to meet different latency requirements, and can also accommodate terminals with different capabilities.

In another possible case, the LP-WUS indicates that the sensing result or the RRM measurement result is reported as triggered by an event. The LP-WUS may indicate an event, for example, a threshold condition being met. When the threshold condition is met, the terminal may report the sensing result or the RRM measurement result by using the first module. The base station may receive the sensing result or the RRM measurement result based on the event.

It may be understood that the threshold condition may include one or more of a quantity of times of receiving a sensing signal or an RRM measurement signal, a reference signal received power (reference signal received power, RSRP) threshold of a sensing signal or an RRM measurement signal, a reference signal received quality (reference signal received quality, RSRQ) threshold of a sensing signal or an RRM measurement signal, or a signal to interference plus noise ratio (signal to interference plus noise ratio, SINR) threshold of a sensing signal or an RRM measurement signal.

The following describes a diagram of events with reference to Table 5.

| Event (event) | Parameter (parameter) | Range (range) |
|---|---|---|
| A1, A2, A4, A5, B1 | RSRP threshold (threshold) | 0-127 |
| | RSRQ threshold (threshold) | 0-127 |
| | SINR threshold (threshold) | 0-127 |

As shown in Table 5, when the LP-WUS indicates that the event is A1, A2, A4, A5, or B1, and when the sensing signal or the RRM measurement signal meets the threshold condition, the sensing result or the RRM measurement result may be reported. For example, the threshold condition may include an RSRP threshold from 0 to 127. In this case, when an RSRP of the RRM measurement signal or the sensing signal is between 0 and 127, the terminal may report the sensing result or the RRM measurement result. For another example, the threshold condition may include an RSRQ threshold from 0 to 127. In this case, when an RSRQ of the RRM measurement signal or the sensing signal is between 0 and 127, the terminal may report the sensing result or the RRM measurement result. For another example, the threshold condition may include an SINR threshold from 0 to 127. In this case, when an SINR of the RRM measurement signal or the sensing signal is between 0 and 127, the terminal may report the sensing result or the RRM measurement result.

It may be understood that the events shown in Table 5 are merely examples, and do not constitute a limitation on an event that triggers reporting of a sensing result or an RRM measurement result in embodiments of this application.

Based on the foregoing solution, the LP-WUS may indicate a period/trigger event for reporting the sensing result or the RRM measurement result, and the terminal may report the sensing result or the RRM measurement result based on the period/event.

In a possible scenario, a processing operation of the base station may be performed by a CU, and receiving and sending operations of the base station may be performed by a DU or an RU. For example, the CU may determine the LP-WUS, and send the LP-WUS to the DU. The DU may send the LP-WUS to the terminal, or the DU may send the LP-WUS to the RU, and the RU sends the LP-WUS to the terminal.

In another possible scenario, the processing operation of the base station may be performed by a CU-CP, and receiving and sending operations of the base station may be performed by the DU or the RU. For example, the CU-CP may determine the LP-WUS, and send the LP-WUS to the DU. The DU may send the LP-WUS to the terminal, or the DU may send the LP-WUS to the RU, and the RU sends the LP-WUS to the terminal.

In an O-RAN scenario, the operation performed by the CU may be performed by the O-CU, the operation performed by the DU may be performed by the O-DU, the operation performed by the RU may be performed by the O-RU, and the operation performed by the CU-CP may be performed by the O-CU-CP.

Communication apparatuses provided in embodiments of this application are described based on the following embodiments. FIG. 6 is a block diagram of a communication apparatus 600 according to an embodiment of this application. The communication apparatus 600 may correspondingly implement functions or steps implemented by the terminal or the base station in the foregoing method embodiments. The communication apparatus may include a processing unit 610 and a transceiver unit 620. Optionally, a storage unit may be further included. The storage unit may be configured to store instructions (code or a program) and/or data. The processing unit 610 and the transceiver unit 620 may be coupled to the storage unit. For example, the processing unit 610 may read the instructions (the code or the program) and/or the data in the storage unit, to implement a corresponding method. The foregoing units may be independently disposed, or may be partially or completely integrated.

Optionally, the transceiver unit 620 may include a sending unit and a receiving unit. The sending unit may be configured to perform all sending operations performed by the communication apparatus 600, and the receiving unit may be configured to perform all receiving operations performed by the communication apparatus 600.

In some possible implementations, the communication apparatus 600 can correspondingly implement behavior and functions of the terminal and the like in the foregoing method embodiments. For example, the communication apparatus 600 may be a terminal, or may be a component (for example, a chip or a circuit) used in the terminal. The transceiver unit 620 may be configured to perform all receiving or sending operations performed by the terminal in the embodiment shown in FIG. 3, for example, S301 in the embodiment shown in FIG. 3, and/or configured to support another process of the technology described in this specification. The processing unit 610 is configured to perform all operations performed by the terminal in the embodiment shown in FIG. 3 except the receiving and sending operations.

For example, the transceiver unit 620 is configured to receive a low-power wake-up signal. The low-power wake-up signal indicates a function to be performed by the first module. The processing unit 610 is configured to activate the first module to perform the function.

In some possible implementations, the communication apparatus 600 can correspondingly implement behavior and functions of the base station in the foregoing method embodiments. For example, the communication apparatus 600 may be a base station, or may be a component (for example, a chip or a circuit) used in the base station. The transceiver unit 620 may be configured to perform all receiving or sending operations performed by the base station in the embodiment shown in FIG. 3, for example, S301 in the embodiment shown in FIG. 3, and/or configured to support another process of the technology described in this specification. The processing unit 610 is configured to perform all operations performed by the base station in the embodiment shown in FIG. 3 except the receiving and sending operations.

For example, the processing unit 610 is configured to determine a low-power wake-up signal. The low-power wake-up signal indicates a function to be performed by a first module included in a communication apparatus. Power consumption of the first module is lower than power consumption of a second module included in the communication apparatus. The transceiver unit 620 is configured to send the low-power wake-up signal to a first communication apparatus.

For operations performed by the processing unit 610 and the transceiver unit 620, refer to the related descriptions in the foregoing method embodiments.

It should be understood that the processing unit 610 in embodiments of this application may be implemented by a processor or a processor-related circuit component, and the transceiver unit 620 may be implemented by a transceiver, a transceiver-related circuit component, or a communication interface.

Based on a same concept, as shown in FIG. 7, an embodiment of this application provides a communication apparatus 700. The communication apparatus 700 includes a processor 710. Optionally, the communication apparatus 700 may further include a memory 720, configured to store instructions executed by the processor 710, store input data required by the processor 710 to run instructions, or store data generated after the processor 710 runs instructions. The processor 710 may implement the methods shown in the foregoing method embodiments by using the instructions stored in the memory 720.

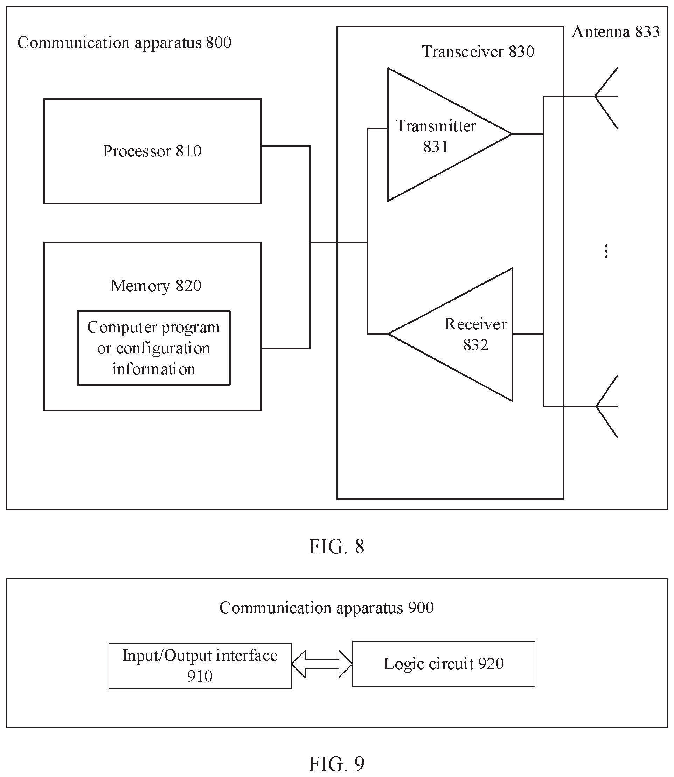

Based on a same concept, as shown in FIG. 8, an embodiment of this application provides a communication apparatus 800. The communication apparatus 800 may be a chip or a chip system. Optionally, in embodiments of this application, the chip system may include a chip, or may include a chip and another discrete component.

The communication apparatus 800 may include at least one processor 810. The processor 810 is coupled to a memory. Optionally, the memory may be located inside the apparatus, or may be located outside the apparatus. For example, the communication apparatus 800 may further include at least one memory 820. The memory 820 stores a necessary computer program, configuration information, a computer program or instructions, and/or data for implementing any one of the foregoing embodiments. The processor 810 may execute the computer program stored in the memory 820, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 810 may work with the memory 820. A specific connection medium between a transceiver 830, the processor 810, and the memory 820 is not limited in this embodiment of this application.

The communication apparatus 800 may further include the transceiver 830, and the communication apparatus 800 may exchange information with another device via the transceiver 830. The transceiver 830 may be a circuit, a bus, a transceiver, or any other apparatus that can be configured to exchange information, or is referred to as a signal transceiver unit. As shown in FIG. 8, the transceiver 830 includes a transmitter 831, a receiver 832, and an antenna 833. In addition, when the communication apparatus 800 is a chip-type apparatus or a circuit, the transceiver in the communication apparatus 800 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 800 may be used in a terminal. Specifically, the communication apparatus 800 may be a terminal, or may be an apparatus that can support a terminal in implementing functions of the terminal in any one of the foregoing embodiments. The memory 820 stores a necessary computer program, a computer program or instructions, and/or data for implementing functions of the communication apparatus in any one of the foregoing embodiments. The processor 810 may execute the computer program stored in the memory 820, to complete the method performed by the terminal in any one of the foregoing embodiments.

In a possible implementation, the communication apparatus 800 may be used in a base station. Specifically, the communication apparatus 800 may be a base station, or may be an apparatus that can support a base station in implementing functions of the base station in any one of the foregoing embodiments. The memory 820 stores a necessary computer program, a computer program or instructions, and/or data for implementing functions of the base station in any one of the foregoing embodiments. The processor 810 may execute the computer program stored in the memory 820, to complete the method performed by the base station in any one of the foregoing embodiments.

The communication apparatus 800 provided in this embodiment may be used in a terminal to complete the method performed by the terminal, or may be used in a base station to complete the method performed by the base station. Therefore, for technical effects that can be achieved by the communication apparatus 800, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 9. Based on the foregoing embodiments, an embodiment of this application further provides another communication apparatus 900, including an input/output interface 910 and a logic circuit 920. The input/output interface 910 is configured to receive code instructions and transmit the code instructions to the logic circuit 920. The logic circuit 920 is configured to execute the code instructions to perform the method performed by the terminal or the base station in any one of the foregoing embodiments.

Optionally, the input/output interface 910 may be an interface on a chip, and the logic circuit 920 may be one or more processors. Optionally, the one or more processors may be located inside or outside the apparatus.

The following describes in detail operations performed by the communication apparatus used in a terminal or a base station.

In an optional implementation, the communication apparatus 900 may be used in the terminal, to perform the method performed by the terminal, specifically, for example, the method performed by the terminal in the embodiment shown in FIG. 3.

For example, the input/output interface 910 is configured to receive a low-power wake-up signal. The low-power wake-up signal indicates a function to be performed by a first module. The logic circuit 920 is configured to activate the first module to perform the function.

The communication apparatus 900 provided in this embodiment may be used in the terminal, to complete the method performed by the terminal. Therefore, for technical effects that can be achieved by the communication apparatus 900, refer to the foregoing method embodiments. Details are not described herein again.

In an optional implementation, the communication apparatus 900 may be used in the base station, to perform the method performed by the base station, specifically, for example, the method performed by the base station in the embodiment shown in FIG. 3.

For example, the logic circuit 920 is configured to determine a low-power wake-up signal. The low-power wake-up signal indicates a function to be performed by a first module included in a communication apparatus. Power consumption of the first module is lower than power consumption of a second module included in the communication apparatus. The input/output interface 910 is configured to send the low-power wake-up signal to a first communication apparatus.

The communication apparatus 900 provided in this embodiment may be used in the base station, to complete the method performed by the base station. Therefore, for technical effects that can be achieved by the communication apparatus 900, refer to the foregoing method embodiments. Details are not described herein again.

According to the foregoing embodiments, an embodiment of this application further provides a communication system. The communication system includes at least one communication apparatus used in a terminal and at least one communication apparatus used in a base station. For technical effects that can be achieved, refer to the foregoing method embodiments. Details are not described herein again.

Based on the foregoing embodiments, an embodiment of this application further provides a system. The communication system includes at least one base station and a terminal.

Based on the foregoing embodiments, an embodiment of this application further provides a computer-readable storage medium. The computer-readable storage medium stores a computer program or instructions. When the instructions are executed, the method performed by the terminal or the method performed by the base station in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatuses in FIG. 6 to FIG. 9, an embodiment of this application further provides a chip, including a processor, configured to support the communication apparatus in implementing the functions of the terminal or the base station in the foregoing method embodiments. In a possible design, the chip is connected to a memory, or the chip includes a memory. The memory is configured to store a computer program or instructions and data that are necessary for the communication apparatus.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specified function in one or more procedures in the flowcharts and/or in one or more blocks in the block diagrams.

The computer program or the instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations of this application provided that they fall within the scope of protection defined by the following claims and their equivalent technologies.

## Claims

1. A communication method, applied to a communication apparatus, wherein the communication apparatus comprises a first module and a second module, power consumption of the first module is lower than power consumption of the second module, and the method comprises:
receiving a low-power wake-up signal, wherein the low-power wake-up signal indicates a function to be performed by the first module; and
activating the first module to perform the function.

2. The method according to claim 1, wherein the function comprises one or more of the following:
channel state information measurement, radio resource management measurement, small data transmission, sensing, or radio frequency channel data RF-map updating.

3. The method according to claim 1 or 2, wherein the function comprises sensing, and the low-power wake-up signal further indicates one or more of the following:
a waveform of a sensing signal, a waveform for reporting a sensing result, a time domain resource of a sensing signal, a quantity of sensing times, or a moment for reporting a sensing result.

4. The method according to claim 3, wherein the waveform of a sensing signal comprises a chirp signal or an orthogonal frequency division multiplexing OFDM signal.

5. The method according to claim 1 or 2, wherein the function comprises radio resource management measurement, and the low-power wake-up signal further indicates one or more of the following:
a signal format for measurement or a measurement rule.

6. The method according to claim 5, wherein the signal format for measurement comprises a low-power synchronization signal or a synchronization signal and physical broadcast channel block.

7. The method according to claim 5 or 6, wherein the measurement rule comprises relaxed measurement or normal measurement.

8. The method according to claim 7, wherein the measurement rule comprises relaxed measurement, and the low-power wake-up signal further indicates a quantity of measurement times, a measurement period, a length of a measurement window, or a starting position of a measurement window.

9. The method according to claim 5, wherein the radio resource management measurement comprises neighboring cell measurement, and the low-power wake-up signal further indicates a quantity of neighboring cells associated with a cell in which the terminal device is located.

10. The method according to claim 1 or 2, wherein the low-power wake-up signal indicates that the function comprises sensing and radio resource management measurement, and the low-power wake-up signal further indicates that a waveform for measurement is a chirp signal.

11. A communication method, comprising:
determining a low-power wake-up signal, wherein the low-power wake-up signal indicates a function to be performed by a first module comprised in a communication apparatus, and power consumption of the first module is lower than power consumption of a second module comprised in the communication apparatus; and
sending the low-power wake-up signal to the communication apparatus.

12. The method according to claim 11, wherein the function comprises one or more of the following:
channel state information measurement, radio resource management measurement, small data transmission, sensing, or radio frequency channel data RF-map updating.

13. The method according to claim 11 or 12, wherein the function comprises sensing, and the low-power wake-up signal further indicates one or more of the following:
a format of a sensing signal, a waveform for reporting a sensing result, a time domain resource of a sensing signal, a quantity of sensing times, or a moment for reporting a sensing result.

14. The method according to claim 13, wherein the format of a sensing signal comprises a chirp signal or an orthogonal frequency division multiplexing OFDM signal.

15. The method according to claim 11 or 12, wherein the function comprises radio resource management measurement, and the low-power wake-up signal further indicates one or more of the following:
a signal format for measurement or a measurement rule.

16. The method according to claim 15, wherein the signal format for measurement comprises a low-power synchronization signal or a synchronization signal and physical broadcast channel block.

17. The method according to claim 15 or 16, wherein the measurement rule comprises relaxed measurement or normal measurement.

18. The method according to claim 17, wherein the measurement rule comprises relaxed measurement, and the low-power wake-up signal further indicates a quantity of measurement times, a measurement period, a length of a measurement window, or a starting position of the measurement window.

19. The method according to claim 15, wherein the radio resource management measurement comprises neighboring cell measurement, and the low-power wake-up signal further indicates a quantity of neighboring cells associated with a cell in which the terminal device is located.

20. The method according to claim 11 or 12, wherein the low-power wake-up signal indicates that the function comprises sensing and radio resource management measurement, and the low-power wake-up signal further indicates that a format for measurement is a chirp signal.

21. A communication apparatus, comprising a unit configured to perform the method according to any one of claims 1 to 10, or comprising a unit configured to perform the method according to any one of claims 11 to 20.

22. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 10, or the electronic apparatus is enabled to perform the method according to any one of claims 11 to 20.

23. A communication system, comprising an apparatus configured to perform the method according to any one of claims 1 to 10 and an apparatus configured to perform the method according to any one of claims 11 to 20.

24. A chip system, wherein the chip system comprises:
a communication interface; and
a processor, configured to: invoke and run instructions through the communication interface, to enable a device on which the chip system is installed to perform the method according to any one of claims 1 to 10, or to enable a device on which the chip system is installed to perform the method according to any one of claims 11 to 20.
